# EUROPÄISCHE PATENTSCHRIFT

(11) **EP 2 247 390 B1**
(45) Veröffentlichungstag und Bekanntmachung des Hinweises auf die Patenterteilung: **09.09.2015**
(21) Anmeldenummer: 09712964.7
(22) Anmeldetag: 12.02.2009
(51) Int. Cl.: B01D 46/00, B01D 46/10, B01D 46/24, B01D 46/52, B05B 13/04

(54) **VORRICHTUNG UND VERFAHREN ZUM ABTRENNEN VON NASSLACK-OVERSPRAY**
APPARATUS AND METHOD FOR SEPARATING WET PAINT OVERSPRAY
DISPOSITIF ET PROCÉDÉ DE SÉPARATION D'EXCÈS DE PROJECTION DE PEINTURE HUMIDE

(30) Priorität: 20.02.2008 DE 102008010189
(43) Veröffentlichungstag der Anmeldung: 10.11.2010
(60) Teilanmeldung: 13170457.9
(73) Patentinhaber: Dürr Systems GmbH, 74321 Bietigheim-Bissingen (DE)
(72) Erfinder: WESCHKE, Jürgen, 71263 Weil der Stadt (DE)
(74) Vertreter: Hoeger, Stellrecht & Partner Patentanwälte mbB
(86) Internationale Anmeldenummer: PCT/EP2009/000977
(87) Internationale Veröffentlichungsnummer: WO 2009/103454

(56) Entgegenhaltungen:
- DE-A1-102005 013 711
- GB-A- 598 428
- US-A- 1 710 469

## Beschreibung

Die vorliegende Erfindung betrifft eine Vorrichtung zum Abtrennen von Nasslack-Overspray aus einem Overspray-Partikel enthaltenden Rohgasstrom, welche mindestens zwei Filtervorrichtungen umfasst, die ihrerseits jeweils eine Einlassöffnung, durch welche ein Teil-Rohgasstrom in die betreffende Filtervorrichtung eintritt, und jeweils mindestens ein Filterelement zum Abtrennen des Oversprays aus dem Teil-Rohgasstrom umfassen.

Bei einer solchen Vorrichtung erfolgt die trockene Abtrennung des Nasslack-Oversprays aus dem jeweiligen Teil-Rohgasstrom, nachdem zuvor ein fließfähiges, partikelförmiges, als "Precoat"-Material bezeichnetes Filterhilfsmaterial in den Teil-Rohgasstrom abgegeben wurde.

Dieses Filterhilfsmaterial dient dazu, sich als Sperrschicht an den Oberflächen der Filterelemente abzusetzen, um zu verhindern, dass diese Flächen durch anhaftende Overspray-Partikel verkleben. Durch periodisches Abreinigen der Filterelemente gelangt das Gemisch aus Filterhilfsmaterial und Nasslack-Overspray von den Filterelementen in Filterhilfsmaterialaufnahmebehälter, aus denen es abgesaugt werden kann, um einer Entsorgung oder Wiederverwendung als Filterhilfsmaterial zugeführt zu werden. Ferner kann das in den Filterhilfsmaterialaufnahmebehältern befindliche Gemisch aus Filterhilfsmaterial und Nasslack-Overspray mittels Druckluftpulsen aus einer Druckluftlanze aufgewirbelt werden, um so aus dem Filterhilfsmaterialaufnahmebehälter zu den Filterelementen aufzusteigen und sich dort abzusetzen.

Ein kritischer Punkt für die Prozesssicherheit einer solchen Vorrichtung zum Abtrennen von Nasslack-Overspray ist das Fließverhalten der Mischung aus Filterhilfsmaterial und Nasslack-Overspray. Ist kein ausreichendes Fließverhalten mehr gegeben, so kann in den Filterhilfsmaterialaufnahmebehältern kein Materialaustausch mehr stattfinden. Das Material in den Filterhilfsmaterialaufnahmebehältern kann nicht mehr zur Absaugöffnung nachfließen, und die Behälterfüllstände bleiben oberhalb des Wertes, der den Absaugvorgang beendet. In diesem Fall muss der Lackierprozess unterbrochen werden, und das Material in den Filterhilfsmaterialaufnahmebehältern muss manuell so aufgelockert werden, dass es wieder fließfähig und somit auch absaugfähig wird.

Auch wenn die Filterhilfsmaterialaufnahmebehälter mit Fluidböden in Form von Platten aus gesintertem Kunststoff versehen sind, um das in den Filterhilfsmaterialaufnahmebehältern enthaltene Material durch Zuführung von Druckluft zu fluidisieren, so kann hierdurch eine ausreichende Auflockerung zur Wiederherstellung des erwünschten Fließverhaltens des Materials nicht gewährleistet werden. Die Hafteigenschaften der Partikel in dem Gemisch aus Filterhilfsmaterial und Nasslack-Overspray sind nämlich wesentlich stärker als die Strömungskräfte der Druckluft, so dass die Schicht aus dem Material als Ganzes angehoben wird oder sich in dem Material Kanäle bilden, durch die die Druckluft nach oben strömt. Zusätzlich erschwert wird die Fluidisierung des Materials durch die große Spreizung der Partikelgrößenverteilung des Filterhilfsmaterials (in einem Bereich von ungefähr 2 µm bis ungefähr 100 µm). Zur Fluidisierung einer Schüttung von Partikeln mit einem Durchmesser von 2 µm auf eine Porosität von ungefähr 0,85 reicht eine Strömungsgeschwindigkeit von 0,00016 m/s. Für die Fluidisierung einer Schüttung von Partikeln mit einem Durchmesser von 100 µm benötigt man eine Strömungsgeschwindigkeit von 0,34 m/s, d.h. eine ungefähr 2.000fach höhere Strömungsgeschwindigkeit als im Fall von Partikeln mit einem Durchmesser von 2 µm. Auch wenn die Strömungskräfte gegenüber den Haftkräften überwiegen sollten, lassen sich daher durch Einspeisen von Druckluft keine gleichmäßigen Fluidisierungsbedingungen einstellen. Es findet eher eine Klassierung statt, bei der der Feinanteil ausgetragen wird und der Grobanteil unbeweglich auf dem Boden der Filterhilfsmaterialaufnahmebehälter verbleibt. Dieser Klassiereffekt tritt auch auf, wenn das Filterhilfsmaterial mittels oberhalb der Filterhilfsmaterialaufnahmebehälter angeordneter Aufwirbelungsvorrichtungen durch Druckluftpulse aufgewirbelt wird.

Die DE 10 2005 013 711 A1 offenbart eine Vorrichtung zum Abtrennen von Nasslack-Overspray aus einem Overspray-Partikel enthaltenden Rohgasstrom gemäß dem Oberbegriff von Anspruch 1.

Die WO 2009/026987 A1, welche als Stand der Technik gemäß Art. 54(3) EPÜ nur bei der Prüfung auf Neuheit zu berücksichtigen ist, offenbart eine Vorrichtung zum Abtrennen von Nasslack-Overspray aus einem Overspray-Partikel enthaltenden Rohgasstrom, bei welcher jeder Filtervorrichtung, welche jeweils eine Einlassöffnung für den Eintritt eines Teil-Rohgasstroms in die betreffende Filtervorrichtung aufweist, ein eigener Aufnahmebehälter zugeordnet ist und in jedem Aufnahmebehälter ausschließlich das aus einer einzigen Filtervorrichtung abgereinigte Gemisch aus Filterhilfsmaterial und Nasslack-Overspray mechanisch vermischt wird.

Der vorliegenden Erfindung liegt die Aufgabe zugrunde, eine Vorrichtung zum Abtrennen von Nasslack-Overspray der eingangs genannten Art zu schaffen, welche es ermöglicht, die Fließfähigkeit der Mischung aus Filterhilfsmaterial und von den Filterelementen abgereinigtem Nasslack-Overspray in den Filterhilfsmaterialaufnahmebehältern in einfacher und effizienter Weise aufrechtzuerhalten.

Diese Aufgabe wird durch eine Vorrichtung zum Abtrennen von Nasslack-Overspray nach Anspruch 1 gelöst.

Der erfindungsgemäßen Lösung liegt das Konzept zugrunde, dass aus mehreren Filtervorrichtungen, die jeweils von einem Teil-Rohgasstrom durchströmt werden, abgereinigtes Material von ein und demselben Aufnahmebehälter aufgenommen und mittels einer Mischvorrichtung innerhalb des Aufnahmebehälters mechanisch vermischt wird, um auf diese Weise die Haftung zwischen den Partikeln des abgereinigten Materials mechanisch zu zerstören, ein "Zuwachsen" des Aufnahmebehälters mit dem abgereinigten Material zu verhindern und eine größtmögliche Homogenität des im Aufnahmebehälter vorhandenen Materials durch die Durchmischung von aus verschiedenen Filtervorrichtungen abgereinigtem Material zu erzielen.

Hierdurch wird eine höhere Prozesssicherheit erreicht, und das Material im Aufnahmebehälter kann bis zu höheren Konzentrationen von darin enthaltenem Nasslack-Overspray aufkonzentriert werden, ohne die Fließfähigkeit der Mischung aus Filterhilfsmaterial und Nasslack-Overspray zu gefährden.

Wenn hingegen jeder Filtervorrichtung ein eigener Filterhilfsmaterialaufnahmebehälter zugeordnet ist, so müssen sehr viele solcher Filterhilfsmaterialaufnahmebehälter vorgesehen und hinsichtlich ihrer Materialzusammensetzung ständig genau kontrolliert werden. Aufgrund unterschiedlicher Belastung der verschiedenen Filtervorrichtungen mit Nasslack-Overspray, je nach der Lage der betreffenden Filtervorrichtungen relativ zu dem Applikationsbereich, in welchem der Nasslack-Overspray in den Rohgasstrom gelangt, ist der Aufkonzentrierungsfaktor, d.h. der jeweilige Anteil des Nasslack-Oversprays an dem gesamten im Filterhilfsmaterialaufnahmebehälter befindlichen Material, von Filterhilfsmaterialaufnahmebehälter zu Filterhilfsmaterialaufnahmebehälter stark unterschiedlich. Entsprechend unterschiedlich ist die Fließfähigkeit des aufkonzentrierten Filterhilfsmaterial/Lack-Gemisches. Wird nur in einem einzigen Filterhilfsmaterialaufnahmebehälter der Absaugvorgang nicht mehr korrekt ausgeführt, führt dies zu einer Prozessunterbrechung und einem manuellen Eingriff. Die Zeiten für den Materialaustausch müssen für jeden Filterhilfsmaterialaufnahmebehälter einzeln eingestellt werden und so ausgewählt werden, dass man sicher über dem kritischen Bereich der Aufkonzentrierung von Nasslack-Overspray liegt. Dies bedeutet einen hohen Materialverbrauch sowohl an frischem Filterhilfsmaterial als auch an mit Nasslack-Overspray beladenem Filterhilfsmaterial und entsprechend hohe Aufwendungen für die Lagerung und den Transport des Filterhilfsmaterials.

Im Gegensatz hierzu muss bei der erfindungsgemäßen Vorrichtung zum Abtrennen von Nasslack-Overspray für mehrere Filtervorrichtungen, die jeweils von einem Teil-Rohgasstrom durchströmt werden, nur ein einziger Aufnahmebehälter hinsichtlich des Materialfüllstandes und des Aufkonzentrierungsfaktors kontrolliert werden. Ferner ist es dadurch, dass das aus mehreren verschiedenen Filtervorrichtungen abgereinigte Material mechanisch vermischt wird, möglich, besonders hohe Konzentrationen von Nasslack-Overspray in dem aus einer bestimmten Filtervorrichtung abgereinigten Material durch Vermischung mit aus anderen Filtervorrichtungen abgereinigtem, weniger mit Nasslack-Overspray beladenem Material auszugleichen. Das in dem größeren Aufnahmebehälter befindliche Material kann daher bis zu einer höheren Konzentration von Nasslack-Overspray aufkonzentriert werden, ohne die Fließfähigkeit der Mischung aus Filterhilfsmaterial und Nasslack-Overspray zu beeinträchtigen.

Außerdem ist der konstruktive Aufwand zur Herstellung eines einzelnen großen Aufnahmebehälters geringer als der Aufwand zur Herstellung vieler kleiner Filterhilfsmaterialaufnahmebehälter, welche jeweils nur einer einzigen Filtervorrichtung zugeordnet sind.

Durch den größeren Innenraum des mehreren Filtervorrichtungen zugeordneten Aufnahmebehälters ist es auch einfacher möglich, eine geeignete Mischvorrichtung im Innenraum des Aufnahmebehälters unterzubringen.

Vorzugsweise ist der Aufnahmebehälter als ein Trog ausgebildet, der sich von einem Bereich senkrecht unter einer ersten Filtervorrichtung bis in einen Bereich senkrecht unter einer zweiten Filtervorrichtung erstreckt, wobei zwischen der ersten Filtervorrichtung und der zweiten Filtervorrichtung grundsätzlich beliebig viele weitere Filtervorrichtungen angeordnet sein können.

Bei einer bevorzugten Ausgestaltung der Erfindung ist vorgesehen, dass der Aufnahmebehälter abgereinigtes Material aus mindestens drei verschiedenen Filtervorrichtungen aufnimmt.

Die Mischvorrichtung weist vorzugsweise mindestens ein um eine im Wesentlichen horizontal ausgerichtete Drehachse drehbares Mischwerkzeug auf. Hierdurch wird eine gute Vermischung des im Aufnahmebehälter enthaltenen Materials längs der Richtung der Drehachse bewirkt, so dass das Material im Aufnahmebehälter keine Konzentrationsunterschiede aufweist.

Um auch in langen Aufnahmebehältern zum Aufnehmen des von den Filterelementen einer Vielzahl von Filtervorrichtungen abgereinigten Materials eine gute Durchmischung erzielen zu können, kann vorgesehen sein, dass die Mischvorrichtung mindestens zwei um eine im wesentlichen horizontal ausgerichtete Drehachse drehbare Drehwellen aufweist, welche in Richtung der Drehachse hintereinander angeordnet sind.

Durch die Verwendung mehrerer kürzerer Drehwellen statt einer einzigen langen Drehwelle zur Halterung der Mischwerkzeuge kann die für die Erzeugung einer Drehbewegung der Mischwerkzeuge erforderliche Antriebsleistung verringert werden.

Um die Bindungskräfte zwischen den Partikeln des im Aufnahmebehälter befindlichen Materials zu zerstören, kann die Mischvorrichtung mit beliebigen geeigneten Mischwerkzeugen versehen sein.

Insbesondere kann vorgesehen sein, dass die Mischvorrichtung mindestens ein Paddel, mindestens eine Pflugschar und/oder mindestens eine Wendel, Schraube oder Spirale umfasst.

Für eine gute Durchmischung des im Aufnahmebehälter angeordneten Materials ist es günstig, wenn die Mischvorrichtung mindestens zwei Wendeln mit entgegengesetztem Drehsinn umfasst.

Da bei der mechanischen Durchmischung des Materials im Aufnahmebehälter kein Klassiereffekt auftritt, bei welchem der Feinanteil des Materials aus dem Aufnahmebehälter ausgetragen wird, kann die Partikelgrößenverteilung des Filterhilfsmaterials bei der erfindungsgemäßen Vorrichtung so gewählt werden, dass eine möglichst große Oberfläche erreicht wird, welche die Nasslack-Partikel einbettet und somit auch entklebt.

Insbesondere kann ein Filterhilfsmaterial verwendet werden, bei dem mindestens 20 Gewichtsprozent der Partikel eine Partikelgröße von weniger als 2 µm aufweisen.

Die Dichte des verwendeten Filterhilfsmaterials, beispielsweise Steinmehl, kann beispielsweise ungefähr 2,75 g/cm³ betragen.

In der erfindungsgemäßen Vorrichtung sind auch Filterhilfsmaterialien verwendbar, deren Schüttguteigenschaften als kohäsiv zu beschreiben sind.

Wenn der Aufnahmebehälter einen Materialauslass zur Entnahme von mit Nasslack-Overspray beladenem Filterhilfsmaterial aus dem Aufnahmebehälter aufweist, so ist es günstig, wenn die Mischvorrichtung ein Mischwerkzeug umfasst, das den Materialaustrag durch den Materialauslass unterstützt.

Ferner kann der Aufnahmebehälter einen Einlass für frisches Filterhilfsmaterial aufweisen, um die Konzentration von Nasslack-Overspray in dem im Aufnahmebehälter befindlichen Material durch die Zufuhr von frischem Filterhilfsmaterial zu verringern.

Vorzugsweise ist der Einlass für frisches Filterhilfsmaterial an einem ersten Endbereich des Aufnahmebehälters angeordnet und weist der Aufnahmebehälter einen Materialauslass auf, der an einem dem ersten Endbereich entgegengesetzten zweiten Endbereich des Aufnahmebehälters angeordnet ist.

Eine besonders gute Durchmischung des im Aufnahmebehälter befindlichen Materials wird erzielt, wenn die Mischvorrichtung bei einer vollständigen Umdrehung einen Mischbereich überstreicht und der Aufnahmebehälter einen Mischabschnitt umfasst, welche eine an die Außenkontur des Mischbereiches angepasste Innenkontur aufweist.

Besonders günstig ist es, wenn der Aufnahmebehälter einen Mischabschnitt umfasst und die Mischvorrichtung bei einer vollständigen Umdrehung im Wesentlichen den gesamten Mischabschnitt des Aufnahmebehälters überstreicht.

Vorzugsweise ist dabei vorgesehen, dass im Normalbetrieb der Vorrichtung im Wesentlichen das gesamte vom Aufnahmebehälter aufgenommene Material im Mischabschnitt des Aufnahmebehälters angeordnet ist.

Der Mischabschnitt des Aufnahmebehälters kann insbesondere im Wesentlichen zylindrisch oder zylinderabschnittsförmig ausgebildet sein.

Die vorliegende Erfindung betrifft ferner ein Verfahren zum Abtrennen von Nasslack-Overspray aus einem Overspray-Partikel enthaltenden Rohgasstrom.

Der vorliegenden Erfindung liegt die weitere Aufgabe zugrunde, ein solches Verfahren zum Abtrennen von Nasslack-Overspray zu schaffen, welches es ermöglicht, in einfacher und effizienter Weise eine ausreichende Fließfähigkeit der Mischung aus Filterhilfsmaterial und von den Filterelementen abgereinigtem Nasslack-Overspray in den Filterhilfsmaterialaufnahmebehältern aufrechtzuerhalten.

Diese Aufgabe wird erfindungsgemäß durch ein Verfahren zum Abtrennen von Nasslack-Overspray aus einem Overspray-Partikel enthaltenden Rohgasstrom nach Anspruch 14 gelöst.

Der Aufnahmebehälter ist vorzugsweise direkt senkrecht unter den Filtervorrichtungen angeordnet, von denen der Aufnahmebehälter abgereinigtes Material aufnimmt.

Ferner kann vorgesehen sein, dass die Teil-Rohgasströme zumindest teilweise durch den Aufnahmebehälter hindurchgeleitet werden, um dabei Filterhilfsmaterial aus dem Aufnahmebehälter aufzunehmen.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen vertikalen Querschnitt durch eine Lackierkabine mit einer darunter angeordneten Vorrichtung zum Abtrennen von Nasslack-Overspray aus einem Overspray-Partikel enthaltenden Rohgasstrom, welche eine unter der Lackierkabine angeordnete Strömungskammer und auf beiden Seiten der Strömungskammer jeweils mehrere Filtermodule umfasst;
- Fig. 2: einen der Fig. 1 entsprechenden schematischen vertikalen Querschnitt durch die Anlage aus Fig. 1, wobei zusätzlich die jeweilige Strömungsrichtung des Rohgases, der aus den Filtermodulen austretenden Abluft und der zur Erzeugung von Querluftschleiern in die Strömungskammer eingespeisten Zuluft durch Pfeile angezeigt sind;
- Fig. 3: eine schematische Draufsicht von oben auf die Anlage aus den Fig. 1 und 2;
- Fig. 4: eine schematische perspektivische Darstellung eines einzelnen Filtermoduls, das zur Anordnung zwischen zwei benachbarten weiteren Filtermodulen vorgesehen ist (Mittelmodul);
- Fig. 5: eine schematische Vorderansicht des Filtermoduls aus Fig. 4;
- Fig. 6: einen schematischen Querschnitt durch ein Filtermodul und einen darunter angeordneten Aufnahmebehälter mit Mischvorrichtung;
- Fig. 7: einen schematischen Längsschnitt durch drei in einer Längsrichtung der Anlage aufeinanderfolgende Filtermodule und einen unter den Filtermodulen angeordneten Aufnahmebehälter mit einer Mischvorrichtung;
- Fig. 8: eine schematische Seitenansicht einer Mischvorrichtung mit zwei Wendeln mit entgegengesetztem Drehsinn, welche um eine horizontale Drehachse drehbar sind;
- Fig. 9: eine schematische Seitenansicht von zwei Gruppen von jeweils vier Filtermodulen, wobei jeder Gruppe von Filtermodulen ein Aufnahmebehälter mit einer Mischvorrichtung zum Durchmischen von aus den Filtermodulen jeweils einer Gruppe abgereinigtem Material zugeordnet ist; und
- Fig. 10: eine schematische Seitenansicht einer Gruppe von acht Filtermodulen, wobei dieser großen Gruppe von Filtermodulen ein einziger langer Aufnahmebehälter zugeordnet ist, dessen Mischvorrichtung zwei um eine im wesentlichen horizontal ausgerichtete Drehachse drehbare Drehwellen zur Halterung von Mischwerkzeugen aufweist, welche in Richtung der Drehachse hintereinander angeordnet sind.

Gleiche oder funktional äquivalente Elemente sind in allen Figuren mit denselben Bezugszeichen bezeichnet.

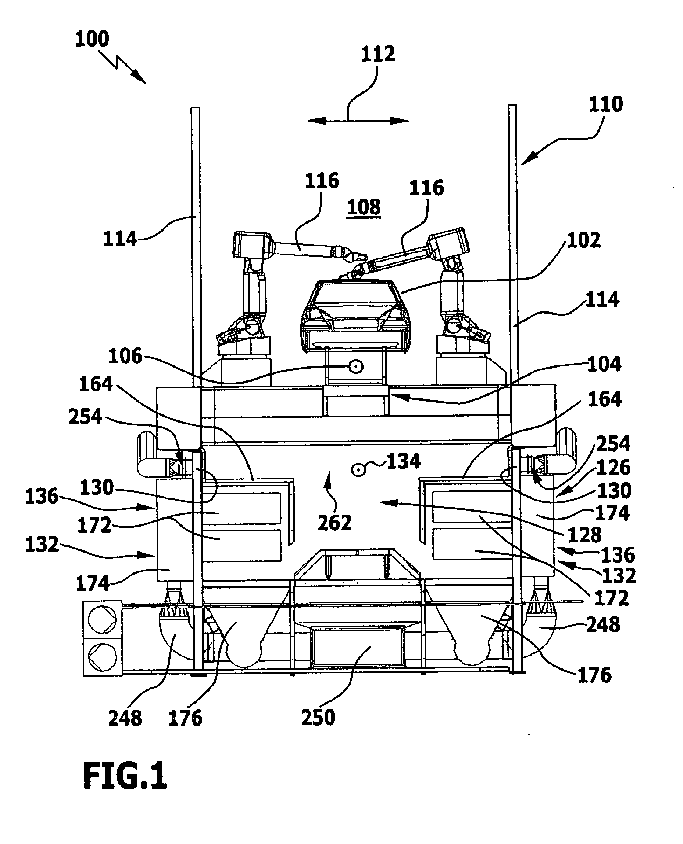

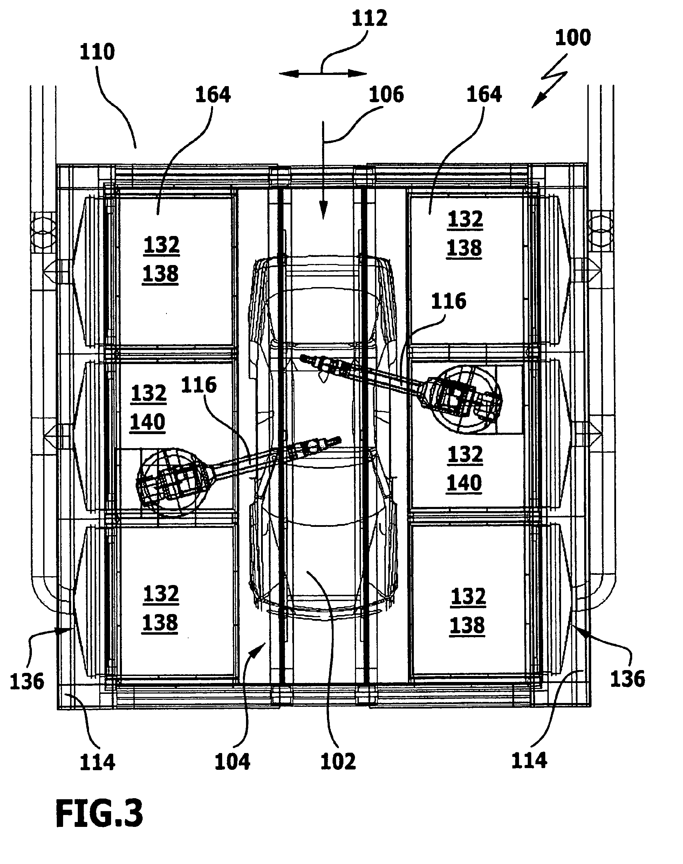

Eine in den Fig. 1 bis 7 dargestellte, als Ganzes mit 100 bezeichnete Anlage zum Spritzlackieren von Fahrzeugkarosserien 102 umfasst eine rein schematisch dargestellte Fördervorrichtung 104, mittels welcher die Fahrzeugkarosserien 102 längs einer Förderrichtung 106 durch einen Applikationsbereich 108 einer als Ganzes mit 110 bezeichneten Lackierkabine bewegt werden können.

Der Applikationsbereich 108 ist der Innenraum der Lackierkabine 110, welcher in einer senkrecht zur Förderrichtung 106, die der Längsrichtung der Lackierkabine 110 entspricht, verlaufenden horizontalen Querrichtung 112 zu beiden Seiten der Fördervorrichtung 104 durch jeweils eine Kabinenwand 114 begrenzt ist.

Zu beiden Seiten der Fördervorrichtung 104 sind in der Lackierkabine 110 Spritzlackiereinrichtungen 116, beispielsweise in Form von Lackierrobotern, angeordnet.

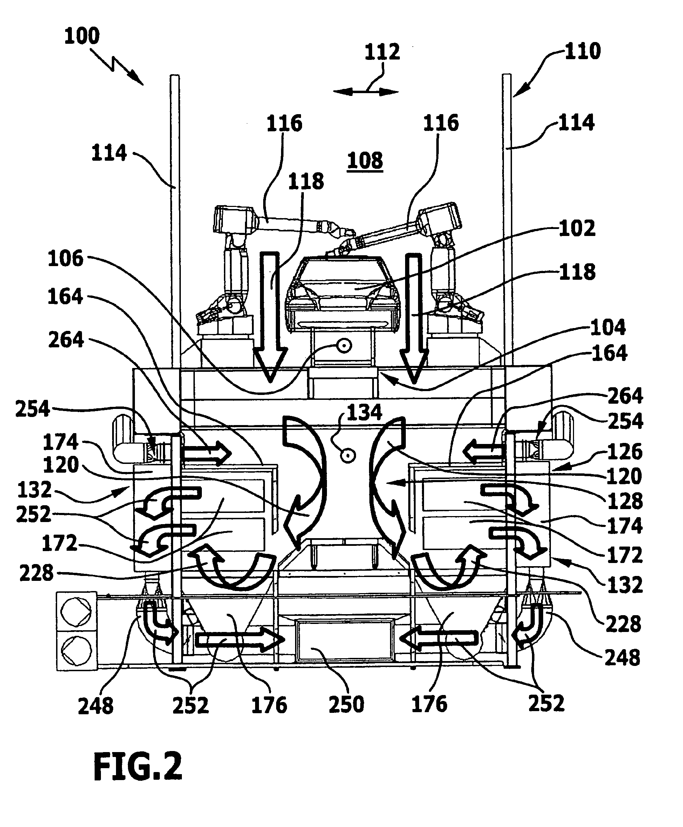

Mittels eines (nur ausschnittsweise dargestellten) Umluftkreislaufs wird ein Luftstrom erzeugt, welcher den Applikationsbereich 108 im Wesentlichen vertikal von oben nach unten durchsetzt, wie dies in Fig. 2 durch die Pfeile 118 angedeutet ist.

Dieser Luftstrom nimmt im Applikationsbereich 108 Lack-Overspray in Form von Overspray-Partikeln auf. Der Begriff "Partikel" umfasst dabei sowohl feste als auch flüssige Teilchen, insbesondere Tröpfchen.

Bei Verwendung von Nasslack besteht der Nasslack-Overspray aus Lacktröpfchen. Die meisten der Overspray-Partikel weisen eine größte Abmessung im Bereich von ungefähr 1 µm bis ungefähr 100 µm auf.

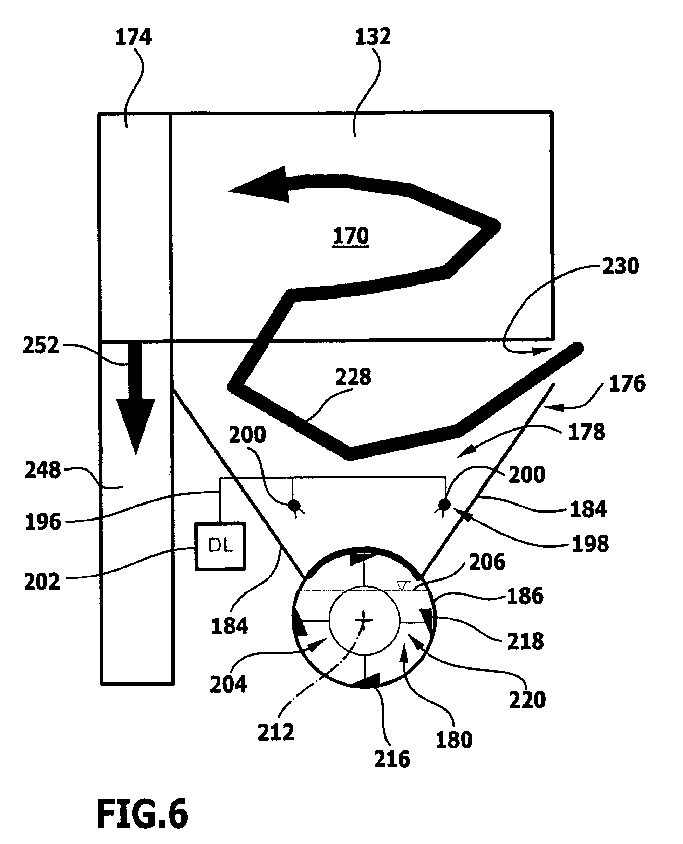

Der mit den Overspray-Partikeln aus dem Applikationsbereich 108 beladene Abluftstrom wird im Folgenden als Rohgasstrom bezeichnet. Die Strömungsrichtung des Rohgasstroms ist in den Fig. 2 und 6 durch Pfeile 120 dargestellt.

Der Rohgasstrom verlässt die Lackierkabine 110 nach unten und gelangt in eine als Ganzes mit 126 bezeichnete Vorrichtung zum Abtrennen von Nasslack-Overspray aus dem Rohgasstrom, welche unterhalb des Applikationsbereichs 108 angeordnet ist.

Die Vorrichtung 126 umfasst eine im wesentlichen quaderförmige Strömungskammer 128, welche sich in der Förderrichtung 106 über die ganze Länge der Lackierkabine 110 hinweg erstreckt und in der Querrichtung 112 durch vertikale Seitenwände 130 begrenzt ist, die im wesentlichen mit den seitlichen Kabinenwänden 114 der Lackierkabine 110 fluchten, so dass die Strömungskammer 128 im wesentlichen dieselbe horizontale Querschnittsfläche aufweist wie die Lackierkabine 110 und im wesentlichen vollständig innerhalb der vertikalen Projektion der Grundfläche der Lackierkabine 110 angeordnet ist.

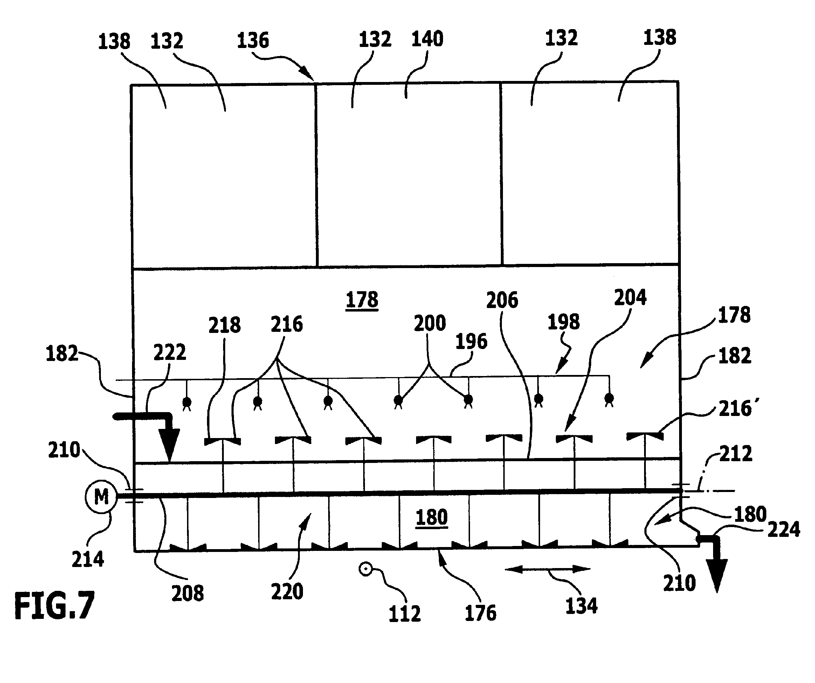

Wie am besten aus Fig. 7 zu ersehen ist, sind auf beiden Seiten der Strömungskammer 128 jeweils mehrere, beispielsweise drei, Filtermodule 132 angeordnet, welche zwei sich in der Längsrichtung 134 (welche mit der Förderrichtung 106 übereinstimmt) der Vorrichtung 126 zum Abtrennen von Nasslack-Overspray erstreckende Modulreihen 136 bilden.

Jede der Modulreihen 136 umfasst zwei Eckmodule 138, welche jeweils ein Ende einer Modulreihe 136 bilden, und mindestens ein zwischen zwei benachbarten Filtermodulen 132 angeordnetes Mittelmodul 140.

Jedes der Filtermodule 132 ist als eine vormontierte Einheit 154 ausgebildet, die an einem vom Montageort der Lackieranlage entfernten Ort hergestellt und als Einheit zum Montageort der Lackieranlage transportiert wird. Am Montageort wird die vormontierte Einheit 154 in der vorgesehenen Arbeitsposition angeordnet und mit einer oder mehreren benachbarten vormontierten Einheiten 154 sowie mit einer Tragekonstruktion des Applikationsbereichs 108 verbunden.

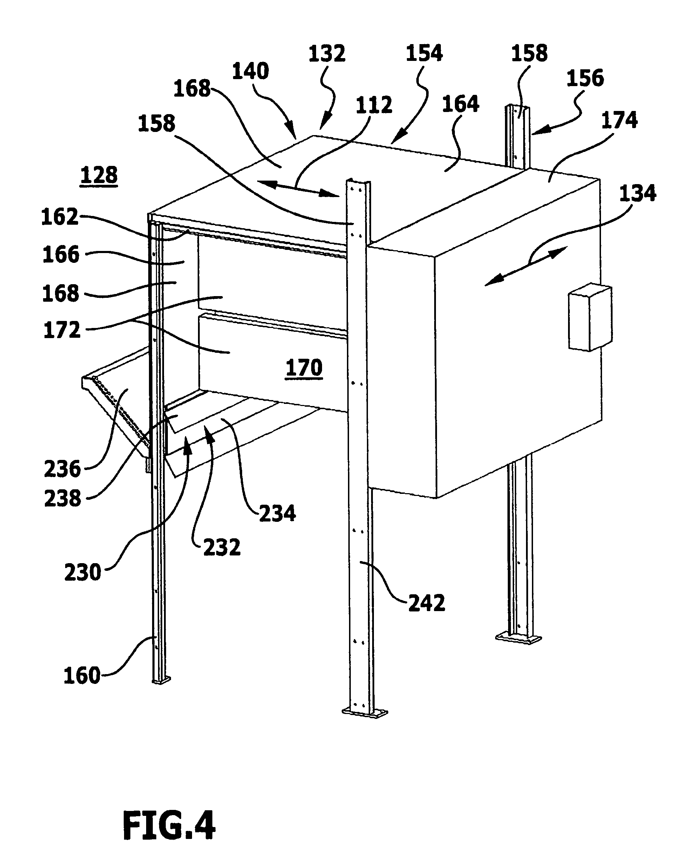

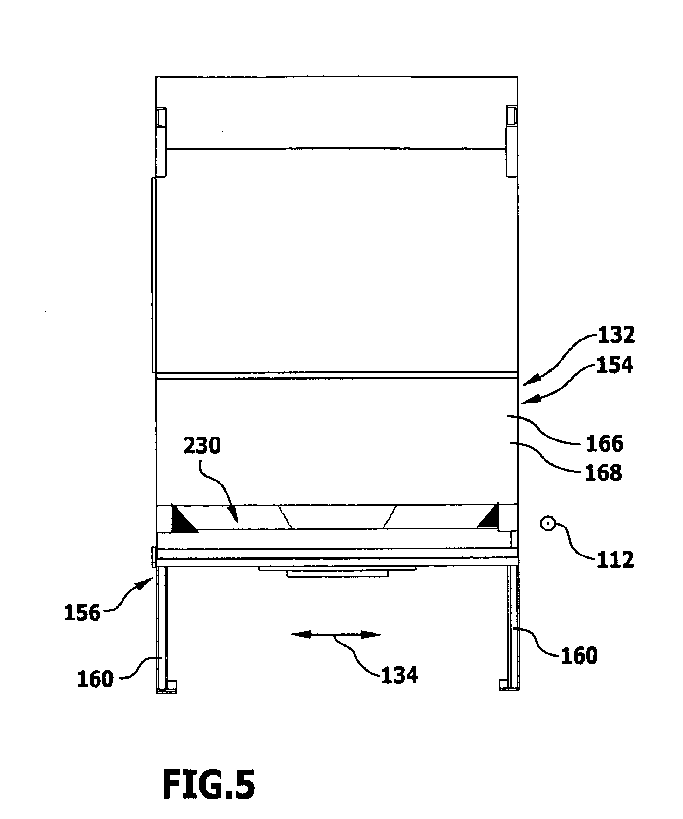

Der Aufbau eines Filtermoduls 132 wird am Beispiel eines Mittelmoduls 140 im Folgenden unter Bezugnahme auf die Fig. 4 und 5 beschrieben:

Das Modul umfasst eine Tragekonstruktion 156 aus zwei vertikalen hinteren Stützen 158 und zwei vertikalen vorderen Stützen 160, welche an ihrem oberen Ende über horizontale Querstreben 162 mit jeweils einer der hinteren Stützen 158 verbunden sind (Fig. 4).

Ferner sind die vorderen Stützen 160 an ihren oberen Enden mittels einer weiteren (nicht dargestellten) Querstrebe miteinander verbunden.

Auch die hinteren Stützen 158 sind mittels (nicht dargestellter) Querstreben oder mittels eines (nicht dargestellten) Verbindungsrahmens miteinander verbunden.

Die Querstreben am oberen Ende der Tragekonstruktion 156 tragen eine horizontale Deckenwand 164.

An den Vorderseiten der vorderen Stützen 160 ist eine vertikale Vorderwand 166 des Filtermoduls 132 gehalten.

Die Deckenwand 164 und die Vorderwand 166 bilden Trennwände 168 des Fltermoduls 132, welche einen innerhalb des Filtermoduls 132 angeordneten Filterelementaufnahmeraum 170 von dem außerhalb des Filtermoduls 132 befindlichen Bereich der Strömungskammer 128 trennen.

Um zwei in einer Modulreihe 136 nebeneinander angeordnete Filtermodule 132 in einfacher Weise und stabil miteinander verbinden zu können oder um ein Filtermodul 132 mit einer angrenzenden Begrenzungswand der Strömungskammer 128 verbinden zu können, umfasst die Tragekonstruktion 156 jedes Filtermoduls 132 mindestens eine hintere Stütze 158, die eine vertikal und in der Querrichtung 112 ausgerichtete, im wesentlichen ebene Anlagefläche 242 aufweist, welche an eine entsprechende Anlagefläche 242 eines benachbarten Filtermoduls 132 oder an eine benachbarte Begrenzungswand angelegt werden kann.

Die zur Verbindung mit einem benachbarten Filtermodul 132 dienende hintere Stütze 158 weist vorzugsweise ein ungefähr U-förmiges Profil auf.

Wie aus Fig. 4 zu ersehen ist, weist jedes Mittelmodul 140 zwei hintere Stützen 158 mit U-förmigen Profilen auf, deren offene Seiten einander zugewandt sind, damit das Mittelmodul 140 auf beiden Seiten mit einem angrenzenden weiteren Filtermodul 132 verbindbar ist.

Jedes Eckmodul 138 weist hingegen nur eine hintere Stütze 158 mit U-förmigem Profil auf; die jeweils gegenüberliegende hintere Stütze 158, welche nicht mit einem benachbarten Filtermodul 132 verbunden werden muss, kann zur Erhöhung ihrer mechanischen Festigkeit statt eines U-förmigen Profils beispielsweise ein T-förmiges Profil aufweisen.

Im Übrigen stimmen die Eckmodule 138 hinsichtlich Aufbau und Funktion mit den vorstehend im Detail beschriebenen Mittelmodulen 140 überein.

In dem Filterelementaufnahmeraum 170 jedes Filtermoduls 132 sind mehrere, beispielsweise zehn, Filterelemente 172 in zwei Reihen übereinander angeordnet, welche von einem gemeinsamen Grundkörper 174, der an den Rückseiten der hinteren Stützen 158 gehalten ist, in horizontaler Richtung abstehen.

Die Filterelemente 172 können beispielsweise aus Platten aus gesintertem Polyethylen, die an ihrer Außenfläche mit einer Membran aus Polytetrafluorethylen (PTFE) versehen sind, ausgebildet sein.

Die Beschichtung aus PTFE dient dazu, die Filterklasse der Filterelemente 172 zu erhöhen (d.h. deren Durchlässigkeit zu verringern) und ferner das permanente Anhaften des aus dem Rohgasstrom abgetrennten Nasslack-Oversprays zu verhindern.

Sowohl das Grundmaterial der Filterelemente 172 als auch deren PTFE-Be-schichtung weisen eine Porosität auf, so dass das Rohgas durch die Poren in den Innenraum des jeweiligen Filterelements 172 gelangen kann.

Um das Verkleben der Filteroberflächen zu verhindern, sind dieselben ferner mit einer Sperrschicht aus in den Rohgasstrom abgegebenem Filterhilfsmaterial versehen. Dieses vorzugsweise partikelförmige Filterhilfsmaterial wird üblicherweise auch als "Precoat"-Material bezeichnet.

Die Sperrschicht bildet sich im Betrieb der Vorrichtung 126 durch Abscheidung des in den Rohgasstrom 120 abgegebenen Filterhilfsmaterials an den Filteroberflächen und verhindert, dass die Filteroberflächen durch anhaftenden Nasslack-Overspray verkleben.

Filterhilfsmaterial aus dem Rohgasstrom 120 setzt sich auch an den Innenseiten der Deckenwand 164 und der Vorderwand 166 des Filtermoduls 132 ab, wo es ebenfalls ein Anhaften von Nasslack-Overspray verhindert.

Als Filterhilfsmaterial kann grundsätzlich jedes Medium verwendet werden, welches dazu in der Lage ist, den Flüssigkeitsanteil des Nasslack-Oversprays aufzunehmen.

Insbesondere kommen als Filterhilfsmaterialien beispielsweise Kalk, Steinmehl, Aluminiumsilikate, Aluminiumoxide, Siliziumoxide, Pulverlack oder ähnliches in Betracht.

Alternativ oder ergänzend hierzu können als Filterhilfsmaterial zur Aufnahme und/oder Bindung des Oversprays auch Partikel mit einer Hohlraumstruktur und relativ zu ihren Außenabmessungen großer innerer Oberfläche verwendet werden, beispielsweise Zeolithe oder andere hohle, beispielsweise kugelförmige Körper aus Polymeren, Glas oder Aluminiumsilikat und/oder natürliche oder synthetisch erzeugte Fasern.

Alternativ oder ergänzend hierzu können als Filterhilfsmaterial zur Aufnahme und/oder Bindung des Oversprays auch chemisch mit dem Overspray reagierende Partikel verwendet werden, beispielsweise chemisch reaktive Partikel aus Amin-, Epoxid-, Carboxyl-, Hydroxyl- oder Isocyanat-Gruppen, chemisch reaktive Partikel aus mit Octylsilan nachbehandeltem Aluminiumoxid oder feste oder flüssige Mono-, Oligo- oder Polymere, Silane, Silanole oder Siloxane.

Das Filterhilfsmaterial besteht vorzugsweise aus einer Vielzahl von Filterhilfsmaterial-Partikeln, welche einen mittleren Durchmesser im Bereich von beispielsweise ungefähr 10 µm bis ungefähr 100 µm aufweisen.

Um das Filterhilfsmaterial dem Rohgasstrom zugeben zu können, ohne dass die Gefahr besteht, dass das Filterhilfsmaterial in den Applikationsbereich 108 der Lackieranlage 100 gelangt, und um zusammen mit Nasslack-Overspray von den Filterelementen 172 abgereinigtes Filterhilfsmaterial auffangen zu können, ist jeder Gruppe von mehreren, beispielsweise drei, Filtermodulen 132 jeweils ein gemeinsamer Aufnahmebehälter 176 zugeordnet, welcher sich in der Längsrichtung 134 der Vorrichtung 126 über die gesamte Länge der, beispielsweise drei, zugeordneten Filtermodule 132 hinweg erstreckt (siehe Fig. 7).

Der Aufnahmebehälter 176 ist im Wesentlichen trogförmig ausgebildet und umfasst einen oberen Eintrittsabschnitt 178 sowie einen sich nach unten an den Eintrittsabschnitt 178 anschließenden Mischabschnitt 180.

Der Eintrittsabschnitt 178 ist durch zwei senkrecht zur Längsrichtung 134 verlaufende Stirnwände 182 und zwei einander gegenüberliegende, sich von der einen Stirnwand 182 bis zur anderen Stirnwand 182 erstreckende und gegen die Vertikale unter einem Winkel von mindestens ungefähr 30° geneigte Seitenwände 184 begrenzt.

Der sich nach unten an den Eintrittsabschnitt 178 anschließende Mischabschnitt 180 ist im wesentlichen zylindrisch ausgebildet und weist eine sich über einen Umfangswinkel von beispielsweise ungefähr 270° erstreckende, zylinderabschnittsförmige Mantelwand 186 auf, deren obere Ränder sich an die unteren Ränder der Seitenwände 184 des Eintrittsabschnitts 178 des Aufnahmebehälters 176 anschließen, so dass sich der Mischabschnitt 180 nach oben hin zu dem Eintrittsabschnitt 178 öffnet.

An einer der Seitenwände 184 des Eintrittsabschnitts 178 des Aufnahmebehälters 176 ist eine Aufwirbelungseinrichtung 198 gehalten, welche dazu dient, Druckluftimpulse in das darunter befindliche, im Aufnahmebehälter 176 aufgenommene Material abzugeben, um dieses Material aufzuwirbeln und so dieses Material, einschließlich des darin enthaltenen Filterhilfsmaterials, in den durch den Eintrittsabschnitt 178 des Aufnahmebehälters 176 hindurchgeführten Rohgasstrom einzubringen.

Während des Betriebs der Anlage 100 wird die Aufwirbelungseinrichtung 198 intermittierend, beispielsweise viermal pro Minute für jeweils ungefähr 5 Sekunden, in Betrieb genommen.

Die Aufwirbelungseinrichtung 198 umfasst mehrere, beispielsweise mindestens zwei pro Filtermodul 132, Austrittsdüsen 200 für Druckluft, welche als Kegeldüsen ausgebildet sind und jeweils einen sich nach unten zu dem Mischabschnitt 180 des Aufnahmebehälters 176 hin erweiternden Druckluftkegel erzeugen können.

Die Austrittsdüsen 200 sind an einer Druckluftrohrleitung 196 angeordnet, welche durch eine der Seitenwände 184 des Eintrittsabschnitts 178 des Aufnahmebehälters 176 hindurchgeführt ist und zu einer außerhalb des Aufnahmebehälters 176 angeordneten Druckluftquelle 202 führt.

Im Mischabschnitt 180 des Aufnahmebehälters 176 ist eine Mischvorrichtung 204 zum gründlichen mechanischen Durchmischen des von den Filterelementen 172 der verschiedenen Filtermodule 132 abgereinigten Materials, welches den Mischabschnitt 180 bis zu einer Füllhöhe 206 anfüllt, angeordnet (Fig. 6).

Wie am besten aus Fig. 7 zu ersehen ist, umfasst die Mischvorrichtung 204 eine Drehwelle 208, welche sich parallel zur Längsrichtung 134 der Vorrichtung 126 erstreckt und mittels Lagern 210 an den Stirnwänden 182 des Aufnahmebehälters 176 um eine horizontale, parallel zur Längsrichtung 134 verlaufende Drehachse 212 drehbar gelagert ist.

Ein Ende der Drehwelle 208 ist durch eine der Stirnwände 182 des Aufnahmebehälters 176 fluiddicht hindurchgeführt und an einen außerhalb des Aufnahmebehälters 176 angeordneten Drehantrieb 214 (beispielsweise einen elektrischen Antriebsmotor) angekoppelt.

Die Drehwelle 208 der Mischvorrichtung 204 kann sich über die gesamte Länge der Lackierkabine 118 von beispielsweise ungefähr 20 m hinweg erstrecken.

Das Füllvolumen des Materials im Mischabschnitt 180 des Aufnahmebehälters 176 kann beispielsweise mindestens 750 I betragen.

An der Drehwelle 208 sind drehfest mit derselben mehrere Mischwerkzeuge 216 angeordnet, welche beispielsweise als Paddel 218 oder als Pflugscharen ausgebildet sein können.

Die Innenkontur des Mischabschnitts 180 des Aufnahmebehälters 176 ist so an die Außenkontur der Mischwerkzeuge 216 der Mischvorrichtung 204 angepasst, dass die Mischwerkzeuge 216 bei einer vollständigen Umdrehung der Drehwelle 208 der Mischvorrichtung 204 um deren Drehachse 212 einen Mischbereich 220 überstreichen, dessen Außenkontur im wesentlichen der Innenkontur des Mischabschnitts 180 des Aufnahmebehälters 176 entspricht.

Vorzugsweise überstreicht die Mischvorrichtung 204 bei einer vollständigen Umdrehung um deren Drehachse 212 im Wesentlichen den gesamten Mischabschnitt 180 des Aufnahmebehälters 176.

Durch die mittels des Drehantriebs 214 angetriebene Mischbewegung der Mischvorrichtung 204 werden die Bindungskräfte zwischen den Partikeln, aus denen das im Aufnahmebehälter 176 befindliche Material besteht, zerstört und eine Vermischung des Materials in der Längsrichtung der Drehwelle 208 bewirkt, so dass es innerhalb des Aufnahmebehälters 176 keine Konzentrationsunterschiede gibt und insbesondere das Verhältnis von frischem Filterhilfsmaterial einerseits und von den Filterelementen 172 abgereinigtem Filterhilfsmaterial und Nasslack-Overspray andererseits überall im Aufnahmebehälter 176 im wesentlichen gleich groß ist.

Um dem Aufnahmebehälter 176 frisches Filterhilfsmaterial zuführen zu können, ist an einer Stirnwand 182 des Aufnahmebehälters 176 ein Einlass 222 für frisches Filterhilfsmaterial vorgesehen, welcher mit einer (nicht dargestellten) Quelle für frisches Filterhilfsmaterial verbunden ist.

An der dem Einlass 222 für frisches Filterhilfsmaterial gegenüberliegenden Stirnwand 182 ist ein Materialauslass 224 vorgesehen, welcher im unteren Bereich des Mischabschnitts 180, nahe der unteren Kuppe des zylindrischen Mischabschnitts 180, angeordnet ist.

Durch diesen Materialauslass 224 kann mit Nasslack-Overspray angereichertes Filterhilfsmaterial aus dem Aufnahmebehälter 176 abgeführt werden, um trotz der Zufuhr von frischem Filterhilfsmaterial durch den Einlass 222 eine im Wesentlichen konstante Füllhöhe 206 im Aufnahmebehälter 176 aufrechtzuerhalten.

In der Nähe des Materialauslasses 224 ist an der Drehwelle 208, in radialer Richtung oder auch stirnseitig, in axialer Richtung, von der Drehwelle 208 abstehend, ein Mischwerkzeug 216' angeordnet, welches den Materialaustrag durch den Materialauslass 224 unterstützt.

Statt als einzelne, in radialer Richtung von der Drehwelle 208 abstehende Paddel 218 können die Mischwerkzeuge 216 der Mischvorrichtung 204 auch als eine koaxial zur Drehachse 212 der Mischvorrichtung 204 ausgebildete Wendel 226 ausgebildet sein.

Insbesondere kann die Mischvorrichtung 204 mit zwei Wendeln 226, 226' mit einander entgegengesetztem Drehsinn versehen sein.

Diese Wendeln können dabei dieselbe Ganghöhe, aber unterschiedliche Radien aufweisen.

Durch den gegenläufigen Drehsinn der beiden Wendeln 226, 226' wird eine besonders gute Durchmischung des im Mischabschnitt 180 vorhandenen Materials erreicht.

Durch die Betätigung der Mischvorrichtung 204 wird ferner die Oberfläche des im Aufnahmebehälter 176 befindlichen Materials geglättet, und im Aufnahmebehälter 176 gegebenenfalls durch Unterhöhlung entstandene Materialbrücken werden aufgebrochen.

Um die aus der Strömungskammer 128 in die Filtermodule 132 eintretende Rohgasströmung in jeweils einem Filtermodul 132 zugeordnete Teil-Rohgasströme 228 zu unterteilen, diese Teil-Rohgasströme 228 gezielt in den Eintrittsabschnitt 178 jeweils eines Aufnahmebehälters 176 hineinzulenken und einen direkten Zutritt der Rohgasströmung aus der Strömungskammer 182 zu den Filterelementen 172 hin zu verhindern, ist jedes Filtermodul 132 mit einer schlitzförmigen Einlassöffnung 230 versehen, die als ein Einlasskanal 232 ausgebildet ist, der einen sich in der Strömungsrichtung des Teil-Rohgasstroms 228 bis zu einer Engstelle 234 verengenden durchströmbaren Querschnitt aufweist.

Alternativ oder ergänzend hierzu kann auch vorgesehen sein, dass der Einlasskanal 232 einen sich in der Strömungsrichtung des Rohgasstromes von einer Engstelle 240 aus erweiternden durchströmbaren Querschnitt aufweist.

Der Einlasskanal 232 wird nach unten hin durch eine Einlaufschräge 236, welche sich von den vorderen Stützen 160 der Tragekonstruktion 156 aus unter einem Winkel von beispielsweise ungefähr 40° bis ungefähr 65° gegenüber der Horizontalen geneigt schräg nach oben erstreckt, begrenzt.

Die Einlaufschräge 236 erstreckt sich in der Längsrichtung 134 der Strömungskammer 128 über im Wesentlichen die gesamte Länge der Einlassöffnung 230 von beispielsweise ungefähr 1 m bis ungefähr 2 m, welche nahezu der Ausdehnung des gesamten Filtermoduls 132 in der Längsrichtung 134 entspricht.

Nach oben hin wird die Einlassöffnung 230 durch den unteren Rand der Vorderwand 166 und durch ein von dem unteren Rand der Vorderwand 166 schräg nach unten in den Innenraum des Filtermoduls 132 abstehendes oberes Leitblech 238 begrenzt.

Das obere Leitblech 238 ist unter einem Winkel von beispielsweise ungefähr 55° bis ungefähr 70° gegen die Horizontale geneigt und erstreckt sich in der Längsrichtung 134 über im Wesentlichen die gesamte Breite der Einlassöffnung 230 von beispielsweise 1 m oder 2 m.

Durch dieses obere Leitblech 238 für den Teil-Rohgasstrom 228 wird erreicht, dass die Rohgasströmung nicht an der Vorderwand 166 des Filtermoduls 132 abreißt, sondern direkt in den Aufnahmebehälter 176 hineingelenkt wird (siehe Fig. 6).

Im Betrieb des Filtermoduls 132 ist das obere Leitblech 238 mit einer Beschichtung aus dem Filterhilfsmaterial versehen, so dass das obere Leitblech 238 leicht zu reinigen ist und kein Overspray direkt an dem oberen Leitblech 238 anklebt.

Durch die vorstehend beschriebene Ausgestaltung der Geometrie der Einlassöffnung 230 wird erreicht, dass die Einlassöffnung 230 eine Engstelle 234 aufweist, an welcher der durchströmbare Querschnitt der Einlassöffnung 230 am kleinsten und daher die Rohgasgeschwindigkeit am größten ist.

Vorzugsweise beträgt die Rohgasgeschwindigkeit in der Engstelle von ungefähr 2 m/s bis ungefähr 8 m/s, insbesondere von ungefähr 3 m/s bis ungefähr 5 m/s.

Auf diese Weise wird wirksam verhindert, dass Filterhilfsmaterial aus dem Inneren des Filtermoduls 132, welches eine geschlossene Box bildet, in die Strömungskammer 128 und von dort in den Applikationsbereich 108 gelangt. Die Aufwirbelung des Filterhilfsmaterials im Aufnahmebehälter 176 und die Abreinigung der Filterelemente 172 können daher zu jedem beliebigen Zeitpunkt erfolgen, ohne die Zufuhr von Rohgas zum Filtermodul 132 oder gar den Betrieb der Spritzlackiereinrichtungen 116 im Applikationsbereich 108 unterbrechen zu müssen.

Ferner ist dadurch, dass der Teil-Rohgasstrom 228 in den Aufnahmebehälter 176 gerichtet aus der jeweiligen Einlassöffnung 230 austritt, gewährleistet, dass eine Umlenkung des Teil-Rohgasstroms 228 im Eintrittsabschnitt 178 des Aufnahmebehälters 176 erfolgt. Dadurch wird eine ausreichende Menge von Filterhilfsmaterial, die durch das Aufwirbeln aus der im Aufnahmebehälter 176 befindlichen Vorlage erzeugt wird, durch den Teil-Rohgasstrom 228 mitgerissen.

Die Rohgasströmung aus der Strömungskammer 128 durch die Einlassöffnung 230 in den Innenraum des Filtermoduls 132 ist in Fig. 6 schematisch dargestellt. Hieraus ist deutlich zu ersehen, dass sich im Innenraum des Filtermoduls 132 eine Strömungswalze mit einer horizontal verlaufenden Achse ausbildet.

Auf der der Einlassöffnung 230 gegenüberliegenden Seite des Aufnahmebehälters 176 strömt die mit Filterhilfsmaterial beladene Rohgasströmung wieder aus dem Eintrittsabschnitt 178 des Aufnahmebehälters 176 heraus und verteilt sich dann über die gesamte Tiefe des Filterelementaufnahmeraums 170, so dass eine Verwirbelung um die Filterelemente 172 ausgebildet wird und aufgrund der hohen Dynamik, die der Teil-Rohgasstrom 228 in der Engstelle 234 erhalten hat, eine homogene Verteilung des Filterhilfsmaterials auf die einzelnen Filterelemente 172 gewährleistet ist.

Im Betrieb jedes Filtermoduls 132 überstreicht der in das jeweilige Filtermodul 132 eintretende Teil-Rohgasstrom 228 die Filteroberflächen der Filterelemente 172, wobei sowohl das mitgeführte Filterhilfsmaterial als auch der mitgeführte Nasslack-Overspray an den Filteroberflächen abgeschieden werden, und das gefilterte Rohgas gelangt als Abluftstrom durch die porösen Filteroberflächen in die Innenräume der Filterelemente 172, die mit einem Hohlraum innerhalb des Grundkörpers 174, von dem die Filterelemente 172 abstehen, verbunden sind. Von diesem Hohlraum gelangt der gereinigte Abluftstrom in jeweils ein Abluftrohr 248, welches von dem Grundkörper 174 der Filterelemente 172 jedes Filtermoduls 132 zu einem ungefähr mittig unter der Strömungskammer 128 angeordneten und parallel zur Längsrichtung 134 der Strömungskammer 128 verlaufenden Abluftkanal 250 führt (siehe insbesondere die Fig. 1 und 2). Die Strömungsrichtung des Abluftstroms ist in Fig. 2 durch die Pfeile 252 angegeben.

Die von dem Nasslack-Overspray gereinigte Abluft aus dem Abluftkanal 250 gelangt zu einem (nicht dargestellten) Abluftgebläse, von wo die gereinigte Abluft über ein (nicht dargestelltes) Kühlregister und eine (nicht dargestellte) Zuführleitung einer oberhalb des Applikationsbereichs 108 angeordneten (nicht dargestellten) Luftkammer, dem sogenannten Plenum, zugeführt wird.

Von dieser Luftkammer gelangt die gereinigte Abluft über eine Filterdecke in den Applikationsbereich 108 zurück.

Von der Zuführleitung zweigt eine (nicht dargestellte) Abluftleitung ab, durch welche ein Teil des gereinigten Abluftstroms (beispielsweise über einen Kamin) an die Umgebung abgegeben wird.

Dieser an die Umgebung abgegebene Teil des Abluftstroms wird durch Frischluft ersetzt, welche in die Strömungskammer 128 über zwei Luftschleiererzeugungsvorrichtungen 254 eingespeist wird, die über jeweils eine Zuluftleitung 256 mit einer (nicht dargestellten) Zuluftanlage verbunden sind (Fig. 1 und 2).

Jede der Luftschleiererzeugungsvorrichtungen 254 erzeugt jeweils einen Luftschleier, welcher von der jeweils zugeordneten Luftschleiererzeugungsvorrichtung 254 ausgehend in im wesentlichen horizontaler Richtung längs der Oberseiten der Deckenwände 164 der Filtermodule 132 zu einer Engstelle 262 zwischen den oberen Rändern der einander gegenüberstehenden Modulreihen 136 gerichtet ist und dadurch verhindert, dass der mit dem Nasslack-Overspray beladene Rohgasstrom 120 aus dem Applikationsbereich 108 zu der Oberseite der Filtermodule 132 gelangt und der Nasslack-Overspray aus dem Rohgasstrom 120 sich an der Oberseite der Filtermodule 132 absetzt.

Die mittlere Strömungsrichtung der Luft in den von den Luftschleiererzeugungsvorrichtungen 254 erzeugten Querluftschleiern an der Oberseite der Filtermodule 132 ist in Fig. 2 durch die Pfeile 264 veranschaulicht.

Der Großteil der durch den Applikationsbereich 108 hindurchgeführten Luft wird somit in einem Umluftkreislauf geführt, welcher den Applikationsbereich 108, die Strömungskammer 128, die Filtermodule 132, die Abluftrohre 248, den Abluftkanal 250, das Abluftgebläse sowie die Zuführleitung und die Luftkammer über dem Applikationsbereich 108 umfasst, wobei eine ständige Aufheizung der im Umluftkreislauf geführten Luft durch die Frischluftzufuhr über die Luftschleiererzeugungsvorrichtungen 254 vermieden wird.

Da die Abtrennung des Nasslack-Oversprays aus den Teil-Rohgasströmen 228 mittels der Filterelemente 172 trocken, d.h. ohne Auswaschung mit einer Reinigungsflüssigkeit, erfolgt, wird die im Umluftkreislauf geführte Luft beim Abtrennen des Nasslack-Oversprays nicht befeuchtet, so dass auch keinerlei Vorrichtungen zur Entfeuchtung der im Umluftkreislauf geführten Luft erforderlich sind.

Ferner sind auch keine Vorrichtungen zur Abtrennung von Nasslack-Overspray aus einer Auswasch-Reinigungsflüssigkeit erforderlich.

Die Filterelemente 172 der Filtermodule 132 werden in bestimmten Zeitintervallen, wenn ihre Beladung mit Nasslack-Overspray und Filterhilfsmaterial ein vorgegebenes Maß erreicht hat, durch Druckluftimpulse abgereinigt.

Diese Abreinigung kann (in Abhängigkeit vom Druckverlustanstieg an den Filterelementen 172) beispielsweise einmal bis sechsmal pro 8-Stunden-Arbeitsschicht, d.h. ungefähr alle 1-8 Stunden, erfolgen.

Die erforderlichen Druckluftimpulse werden mittels einer (nicht dargestellten) Abpulseinheit erzeugt, welche an dem Grundkörper 174 der Filterelemente 172 jedes Filtermoduls 132 angeordnet ist, wobei die Abpulseinheit dazu in der Lage ist, Druckluftimpulse an Druckluftrohre abzugeben, welche innerhalb des jeweiligen Grundkörpers 174 verlaufen und von der Abpulseinheit in die Innenräume der Filterelemente führen.

Von den Innenräumen der Filterelemente 172 gelangen die Druckluftimpulse durch die porösen Filteroberflächen in den Filterelementaufnahmeraum 170, wobei die an den Filteroberflächen gebildete Sperrschicht aus Filterhilfsmaterial und dem daran abgeschiedenen Nasslack-Overspray von den Filteroberflächen abgelöst wird, so dass die Filteroberflächen in ihren abgereinigten Ursprungszustand zurückversetzt werden.

Das Filterhilfsmaterial wird bei der vorstehend beschriebenen Vorrichtung 126 zum Abtrennen von Nasslack-Overspray ausschließlich durch Aufwirbeln des Filterhilfsmaterials in dem jeweils zugeordneten Aufnahmebehälter 176 den Teil-Rohgasströmen 228 zugegeben.

Um das im Aufnahmebehälter 176 angesammelte, mit Overspray vermischte Filterhilfsmaterial entnehmen und einer Entsorgung oder Weiterverwertung zuführen zu können, umfasst die Vorrichtung 126 zum Abtrennen von Nasslack-Overspray eine (nicht dargestellte) Filterhilfsmaterial-Abführvorrichtung, welche an die Materialauslässe 224 der Aufnahmebehälter 176 angeschlossen ist und beispielsweise ein Sauggebläse zum Absaugen des Materials aus den Aufnahmebehältern 176 umfasst.

Das aus den Aufnahmebehältern 176 entnommene Material, welches Filterhilfsmaterial mit Overspray-Partikeln enthält, kann entweder entsorgt oder - gegebenenfalls nach einer Aufbereitung - zumindest teilweise in der Beschichtungsanlage wiederverwendet werden.

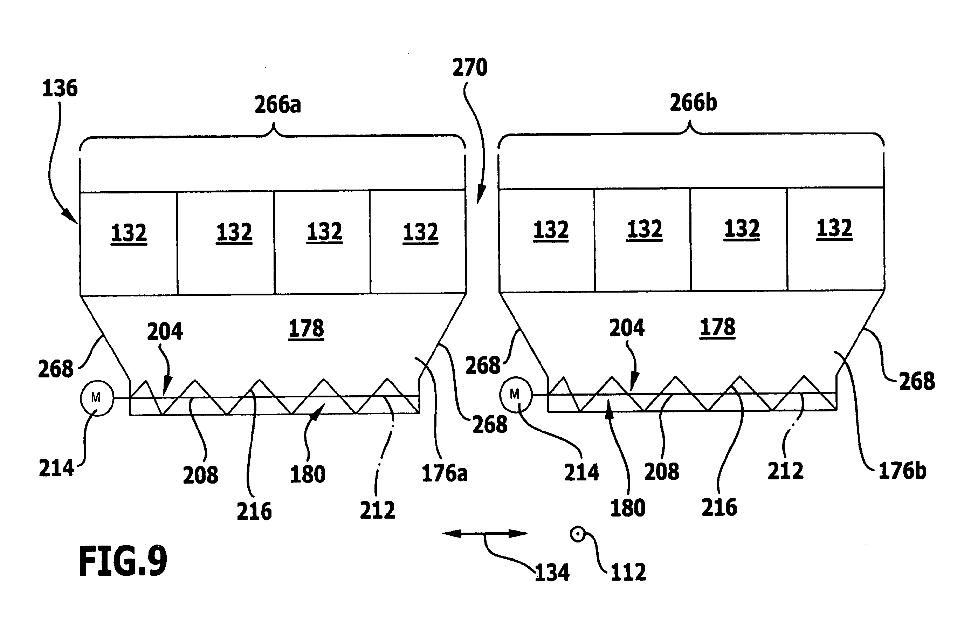

Eine in Fig. 9 in einer schematischen Seitenansicht einer Modulreihe 136 dargestellte zweite Ausführungsform einer Vorrichtung 126 zum Abtrennen von Nasslack-Overspray unterscheidet sich von der vorstehend beschriebenen Vorrichtung 126 dadurch, dass nicht allen in der Längsrichtung 134 der Vorrichtung 126 hintereinander angeordneten Filtermodulen 132 einer Modulreihe 136 ein einziger Aufnahmebehälter 176, der sich über die gesamte Länge der Modulreihe 136 erstreckt, zugeordnet ist, sondern dass stattdessen jede Modulreihe 136 in mehrere, beispielsweise zwei, Modulgruppen 266a, 266b mit jeweils mehreren, beispielsweise jeweils vier, Filtermodulen 132 unterteilt ist und jeder Modulgruppe 266a, 266b jeweils ein Aufnahmebehälter 176a bzw. 176b zugeordnet ist, welcher das von den Filterelementen 172 der Filtermodule 132 der jeweiligen Modulgruppe 266a, 266b abgereinigte Material (Filterhilfsmaterial und Nasslack-Overspray) aufnimmt.

Bei dieser Ausführungsform der Vorrichtung 126 zum Abtrennen von Nasslack-Overspray sind also jeweils mindestens zwei Aufnahmebehälter 176a, 176b in der Längsrichtung 134 aufeinanderfolgend angeordnet, wobei aber immer noch jeder Aufnahmebehälter 176a, 176b das aus mehreren Filtermodulen 132 abgereinigte Material aufnimmt.

Ferner weist jeder der Aufnahmebehälter 176a, 176b jeweils eine Mischvorrichtung 204 auf, mittels welcher das aus verschiedenen Filtermodulen 132 stammende und von dem jeweiligen Aufnahmebehälter 176a, 176b aufgefangene Material durchmischbar ist.

Bei dieser Ausführungsform sind die Stirnwände 182 der Aufnahmebehälter 176a, 176b nicht durchgehend vertikal ausgebildet, sondern weisen einen den Eintrittsabschnitt 178 stirnseitig begrenzenden oberen geneigten Stirnwandabschnitt 268 auf, welcher so gegenüber der Vertikalen geneigt ist, dass der geneigte Stirnwandabschnitt 268 in der Längsrichtung 134 über den Mischabschnitt 180 des betreffenden Aufnahmebehälters 176a, 176b übersteht. Hierdurch wird unter den geneigten Stirnwandabschnitten 268 von in der Längsrichtung 134 aufeinanderfolgenden Aufnahmebehältern 176a, 176b und zwischen den Stirnwänden der Mischabschnitte 180 dieser Aufnahmebehälter 176a, 176b genügend Platz für die Unterbringung jeweils eines Drehantriebs 214 einer Mischvorrichtung 204 geschaffen.

Ferner ist darauf zu achten, dass zwischen den Abluftrohren 248 und den Aufnahmebehältern 176a, 176b genügend Raum zum Ausbauen der Drehwelle 208 jeweils einer Mischvorrichtung 204 zur Verfügung steht.

Die in der Längsrichtung 134 der Vorrichtung 126 hintereinander angeordneten Modulgruppen 266a, 266b können verschiedenen Lackierkabinen oder verschiedenen Lackierabschnitten innerhalb derselben Lackierkabine zugeordnet sein, beispielsweise einem Lackierabschnitt für die Innenlackierung der Fahrzeugkarosserien 102 einerseits und einem Lackierabschnitt für die Außenlackierung der Fahrzeugkarosserien 102 andererseits.

Alternativ hierzu kann auch vorgesehen sein, dass in den verschiedenen Lackierabschnitten, welchen die Modulgruppen 266a, 266b zugeordnet sind, unterschiedliche Lackarten auf die Fahrzeugkarosserien 102 appliziert werden, beispielsweise ein Grundlack einerseits und ein Klarlack andererseits.

In dem über dem zwischen den Modulgruppen 266a, 266b liegenden Bereich der Lackieranlage wird kein Lack auf die Fahrzeugkarosserien 102 appliziert.

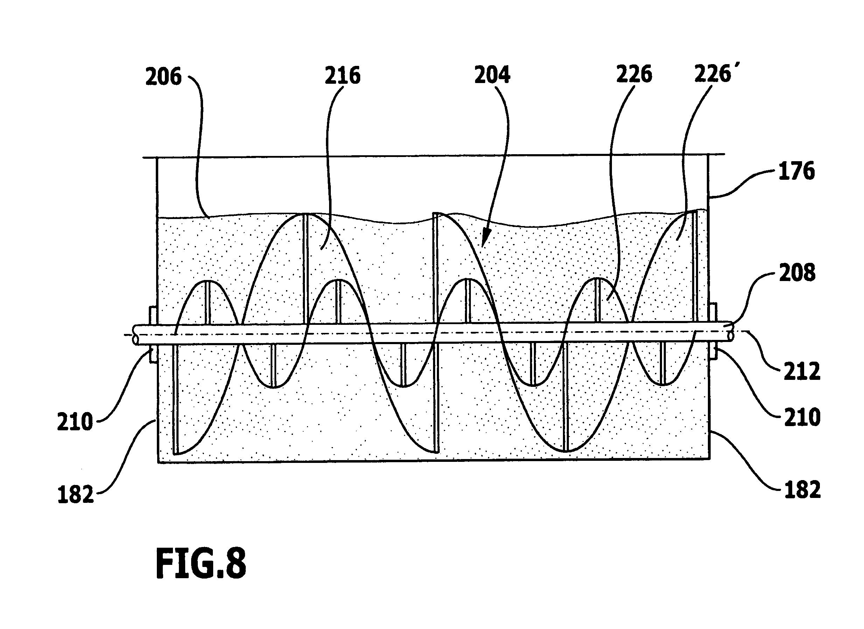

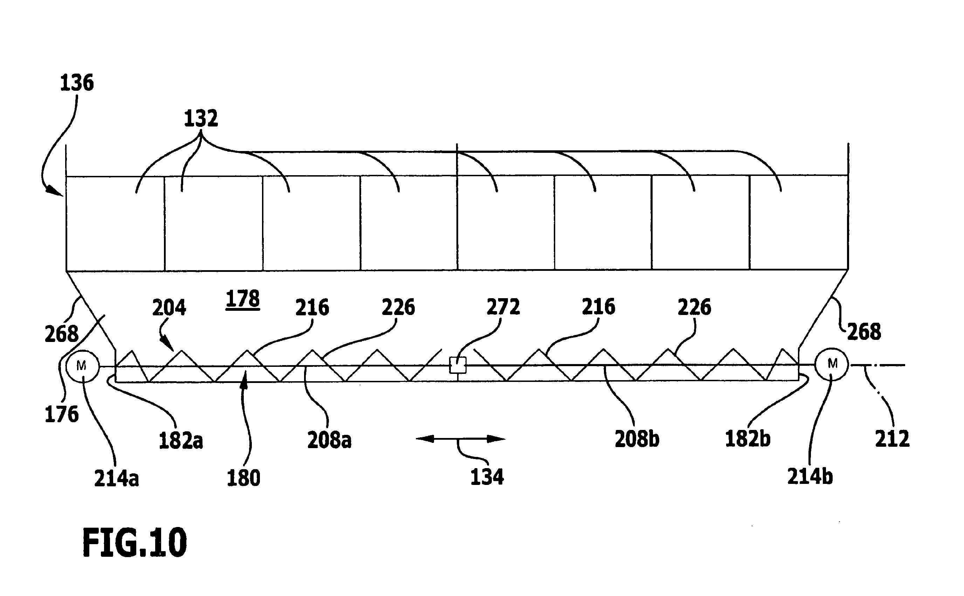

Im Übrigen stimmt die in Fig. 9 dargestellte zweite Ausführungsform einer Vorrichtung 126 zum Abtrennen von Nasslack-Overspray hinsichtlich Aufbau und Funktion mit der in den Fig. 1 bis 8 dargestellten ersten Ausführungsform überein, auf deren vorstehende Beschreibung insoweit Bezug genommen wird. Eine in Fig. 10 in einer schematischen Seitenansicht einer Modulreihe 136 dargestellte dritte Ausführungsform einer Vorrichtung 126 zum Abtrennen von Nasslack-Overspray unterscheidet sich von der in den Fig. 1 bis 8 dargestellten ersten Ausführungsform dadurch, dass die Anzahl der Filtermodule 132, welche demselben Aufnahmebehälter 176 zugeordnet sind, größer ist (beispielsweise acht Filtermodule 132), so dass der Aufnahmebehälter 176 eine sehr große Erstreckung in der Längsrichtung 134 der Vorrichtung 126 (von beispielsweise 16 m oder mehr) aufweist.

Bei einer so großen Länge des Aufnahmebehälters 176 müsste ein Drehantrieb 214 mit einer sehr hohen Antriebsleistung verwendet werden, um eine sich über die gesamte Länge des Aufnahmebehälters 176 erstreckende, mit Mischwerkzeugen 216 versehene Drehwelle 208 zu einer Drehbewegung anzutreiben.

Bei der in Fig. 10 dargestellten dritten Ausführungsform ist daher vorgesehen, dass die Mischvorrichtung 204 zwei in der Längsrichtung 134 und in der Richtung der gemeinsamen Drehachse 212 aufeinanderfolgende Drehwellen 208a, 208b aufweist, welche von jeweils einem eigenen Drehantrieb 214a, 214b angetrieben werden und jeweils in einem Lager 272 in der Mitte des Aufnahmebehälters 176 sowie an der vorderen Stirnwand 182a bzw. an der hinteren Stirnwand 182b des Aufnahmebehälters 176 drehbar gelagert sind.

Jede der Drehwellen 208a, 208b ist mit einem oder mehreren Mischwerkzeugen 216, beispielsweise mit Wendeln 226, zum Durchmischen des im Aufnahmebehälter 176 aufgenommenen Materials versehen.

Durch die Aufteilung der Mischwerkzeuge 216 auf zwei getrennt voneinander gelagerte und angetriebene Drehwellen 208a, 208b kann die für die Erzeugung der Drehbewegung der Mischwerkzeuge 216 erforderliche Antriebsleistung der Drehantriebe 214a, 214b reduziert werden.

Auch bei dieser dritten Ausführungsform sind die Stirnwände 182a, 182b des Aufnahmebehälters 176 nicht durchgehend vertikal ausgebildet, sondern weisen einen den Eintrittsabschnitt 178 stirnseitig begrenzenden oberen geneigten Stirnwandabschnitt 268 auf, welcher so gegenüber der Vertikalen geneigt ist, dass der geneigte Stirnwandabschnitt 268 in der Längsrichtung 134 über den Mischabschnitt 180 des Aufnahmebehälters 176 übersteht.

Hierdurch wird unter den geneigten Stirnwandabschnitten 268 genügend Platz für die Unterbringung jeweils eines Drehantriebs 214a, 214b der Mischvorrichtung 204 geschaffen.

Im Übrigen stimmt die in Fig. 10 dargestellte dritte Ausführungsform einer Vorrichtung 126 zum Abtrennen von Nasslack-Overspray hinsichtlich Aufbau und Funktion mit der in den Fig. 1 bis 8 dargestellten ersten Ausführungsform überein, auf deren vorstehende Beschreibung insoweit Bezug genommen wird.

## Patentansprüche

1. Vorrichtung zum Abtrennen von Nasslack-Overspray aus einem Overspray-Partikel enthaltenden Rohgasstrom (120), umfassend mindestens zwei Filtervorrichtungen (132), die jeweils eine Einlassöffnung (230), durch welche ein Teil-Rohgasstrom (228) in die betreffende Filtervorrichtung (132) eintritt, und jeweils mindestens ein Filterelement (172) zum Abtrennen des Oversprays aus dem Teil-Rohgasstrom (228) umfassen, wobei eine Filteroberfläche des Filterelements (172) mit einer Sperrschicht aus in den Rohgasstrom abgegebenem Filterhilfsmaterial versehen ist,
**dadurch gekennzeichnet,**
**dass** die Vorrichtung (126) mindestens einen Aufnahmebehälter (176) zum Aufnehmen eines von Filterelementen (172) mehrerer Filtervorrichtungen (132) abgereinigten Gemisches aus Filterhilfsmaterial und Nasslack-Overspray und eine Mischvorrichtung (204) zum mechanischen Vermischen des abgereinigten Gemisches aus Filterhilfsmaterial und Nasslack-Overspray aus mehreren Filtervorrichtungen (132) umfasst, wobei durch periodisches Abreinigen der Filterelemente (172) das Gemisch aus Filterhilfsmaterial und Nasslack-Overspray von den Filterelementen (172) in den Aufnahmebehälter (176) gelangt und die Teil-Rohgasströme (228) zumindest teilweise durch den Aufnahmebehälter (176) hindurchgeleitet werden, um dabei Filterhilfsmaterial aus dem Aufnahmebehälter (176) aufzunehmen.

2. Vorrichtung nach Anspruch 1, **dadurch gekennzeichnet, dass** Unterschiede in der Konzentration von Nasslack-Overspray in dem aus verschiedenen Filtervorrichtungen (132) abgereinigten Material durch das mechanische Vermischen ausgeglichen werden und dass der Aufnahmebehälter (176) einen Einlass (222) für frisches Filterhilfsmaterial zur Verringerung der Konzentration von Nasslack-Overspray in dem im Aufnahmebehälter (176) befindlichen Material aufweist.

3. Vorrichtung nach einem der Ansprüche 1 oder 2, **dadurch gekennzeichnet, dass** der Aufnahmebehälter (176) als ein Trog ausgebildet ist, der sich von einem Bereich senkrecht unter einer ersten Filtervorrichtung (132) bis in einen Bereich senkrecht unter einer zweiten Filtervorrichtung (132) erstreckt.

4. Vorrichtung nach einem der Ansprüche 1 bis 3, **dadurch gekennzeichnet, dass** der Aufnahmebehälter (176) einen Materialauslass (224) zur Entnahme von mit Nasslack-Overspray beladenem Filterhilfsmaterial aus dem Aufnahmebehälter (176) aufweist.

5. Vorrichtung nach einem der Ansprüche 1 bis 4, **dadurch gekennzeichnet, dass** der Aufnahmebehälter (176) einen Materialauslass (224) aufweist und dass die Mischvorrichtung (204) ein Mischwerkzeug (216') umfasst, das den Materialaustrag durch den Materialauslass (224) unterstützt.

6. Vorrichtung nach einem der Ansprüche 1 bis 5, **dadurch gekennzeichnet, dass** der Einlass (222) für frisches Filterhilfsmaterial an einem ersten Endbereich des Aufnahmebehälters (176) angeordnet ist und dass der Aufnahmebehälter (176) einen Materialauslass (224) aufweist, der an einem dem ersten Endbereich entgegengesetzten zweiten Endbereich des Aufnahmebehälters (176) angeordnet ist.

7. Vorrichtung nach einem der Ansprüche 1 bis 6, **dadurch gekennzeichnet, dass** die Mischvorrichtung (204) mindestens ein um eine im Wesentlichen horizontal ausgerichtete Drehachse (212) drehbares Mischwerkzeug (216) aufweist, wobei die Mischvorrichtung (204) mindestens zwei Wendeln (226, 226') mit entgegengesetztem Drehsinn umfasst.

8. Vorrichtung nach einem der Ansprüche 1 bis 7, **dadurch gekennzeichnet, dass** das Filterhilfsmaterial Partikel mit einer Hohlraumstruktur und relativ zu ihren Außenabmessungen großer innerer Oberfläche umfasst.

9. Vorrichtung nach einem der Ansprüche 1 bis 8, **dadurch gekennzeichnet, dass** das Filterhilfsmaterial chemisch mit dem Nasslack-Overspray reagierende Partikel umfasst.

10. Vorrichtung nach einem der Ansprüche 1 bis 9, **dadurch gekennzeichnet, dass** das Filterhilfsmaterial aus einer Vielzahl von Filterhilfsmaterial-Partikeln besteht, welche einen mittleren Durchmesser im Bereich von ungefähr 10 µm bis ungefähr 100 µm aufweisen.

11. Vorrichtung nach einem der Ansprüche 1 bis 10, **dadurch gekennzeichnet, dass** die Vorrichtung (126) eine Aufwirbelungseinrichtung (198) aufweist, die mittels Druckluftimpulsen in dem Aufnahmebehälter (176) aufgenommenes Material aufwirbelt und in den Rohgasstrom einbringt.

12. Vorrichtung nach einem der Ansprüche 1 bis 11, **dadurch gekennzeichnet, dass** die Mischvorrichtung (204) bei einer vollständigen Umdrehung einen Mischbereich (220) überstreicht und dass der Aufnahmebehälter (176) einen Mischabschnitt (180) umfasst, welcher eine an die Außenkontur des Mischbereiches (220) angepasste Innenkontur aufweist.

13. Vorrichtung nach einem der Ansprüche 1 bis 12, **dadurch gekennzeichnet, dass** der Aufnahmebehälter (176) einen Mischabschnitt (180) umfasst und dass die Mischvorrichtung (204) bei einer vollständigen Umdrehung im Wesentlichen den gesamten Mischabschnitt (180) des Aufnahmebehälters (176) überstreicht.

14. Verfahren zum Abtrennen von Nasslack-Overspray aus einem Overspray-Partikel enthaltenden Rohgasstrom (120), umfassend folgende Verfahrensschritte:
- Aufteilen des Rohgasstroms (120) in mindestens zwei Teil-Rohgasströme (228), die durch verschiedene Einlassöffnungen (230) in mindestens zwei verschiedene Filtervorrichtungen (132) eintreten, welche jeweils mindestens ein Filterelement (172) zum Abtrennen des Oversprays aus dem jeweiligen Teil-Rohgasstrom (228) umfassen;
- Abtrennen des Oversprays aus den Teil-Rohgasströmen (228) mittels der Filterelemente (172);
- Abreinigen von Material von den Filterelementen (172) mehrerer verschiedener Filtervorrichtungen (132);
- Auffangen des abgereinigten Materials aus den mehreren verschiedenen Filtervorrichtungen (132) in demselben Aufnahmebehälter (176);
- mechanisches Durchmischen des abgereinigten Materials aus den mehreren verschiedenen Filtervorrichtungen (132) in dem Aufnahmebehälter (176) mittels einer Mischvorrichtung (204);
wobei durch periodisches Abreinigen der Filterelemente (172) ein Gemisch aus Filterhilfsmaterial und Nasslack-Overspray von den Filterelementen (172) in den Aufnahmebehälter (176) gelangt und die Teil-Rohgasströme (228) zumindest teilweise durch den Aufnahmebehälter (176) hindurchgeleitet werden, um dabei Filterhilfsmaterial aus dem Aufnahmebehälter (176) aufzunehmen.

15. Verfahren nach Anspruch 14, **dadurch gekennzeichnet, dass** Unterschiede in der Konzentration von Nasslack-Overspray in dem aus verschiedenen Filtervorrichtungen (132) abgereinigten Material durch das mechanische Vermischen ausgeglichen werden und dass der Aufnahmebehälter (176) einen Einlass (222) für frisches Filterhilfsmaterial zur Verriegelung der Konzentration von Nasslack-Overspray in dem im Aufnahmebehälter (176) befindlichen Material aufweist.

16. Verfahren nach einem der Ansprüche 14 oder 15, **dadurch gekennzeichnet, dass** ein partikelförmiges Filterhilfsmaterial in die Teil-Rohgasströme (228) abgegeben wird und sich an den Oberflächen der Filterelemente (172) absetzt und dass ein Gemisch aus Filterhilfsmaterial und Nasslack-Overspray von den Filterelementen (172) mehrerer verschiedener Filtervorrichtungen (132) abgereinigt wird, in demselben Aufnahmebehälter (176) aufgefangen wird und in dem Aufnahmebehälter (176) mittels der Mischvorrichtung (204) mechanisch durchmischt wird.

## Claims

1. A device for separating wet paint overspray from a stream of crude gas (120) containing overspray particles, comprising at least two filter devices (132) which each comprise an inlet opening (230) through which a partial stream of crude gas (228) enters the respective filter device (132) and at least one respective filter element (172) for separating the overspray from the partial stream of crude gas (228), wherein a filter surface of the filter element (172) is provided with a barrier layer of filter aid material added to the stream of crude gas, **characterized in that**
the device (126) comprises at least one reservoir (176) for receiving a mixture of filter aid material and wet paint overspray which has been cleansed from filter elements (172) of a plurality of filter devices (132) and a mixing device (204) for mechanically blending the cleansed mixture of filter aid material and wet paint overspray from a plurality of filter devices (132), wherein by periodic cleansing of the filter elements (172) the mixture of filter aid material and wet paint overspray arrives from the filter element (172) into the reservoir (176) and the partial streams of crude gas (228) are guided at least partly through the reservoir, in order to thereby absorb filter aid material from the reservoir (176).

2. A device in accordance with claim 1, **characterized in that** differences in the concentration of wet paint overspray in the cleansed material from different filter devices (132) are evened out by the mechanical blending and **in that** the reservoir (176) has an inlet (222) for fresh filter aid material for reducing the concentration of wet paint overspray in the material located in the reservoir (176).

3. A device in accordance with either of the Claims 1 or 2, **characterized in that** the reservoir (176) is in the form of a trough which extends from a region located vertically below a first filter device (132) into a region located vertically below a second filter device (132).

4. A device in accordance with any of the Claims 1 to 3, **characterized in that** the reservoir (176) comprises a material outlet opening (224) that is used for extracting filter aid material which is loaded with wet paint overspray from the reservoir (176).

5. A device in accordance with any of the Claims 1 to 4, **characterized in that** the reservoir (176) comprises a material outlet opening (224), and **in that** the mixing device (204) comprises a mixing tool (216') which assists the process of discharging material through the material outlet opening (224).

6. A device in accordance with any of the Claims 1 to 5, **characterized in that** the inlet (222) for fresh filter aid material is arranged in a first end region of the reservoir (176), and **in that** the reservoir (176) comprises a material outlet opening (224) which is arranged in a second end region of the reservoir (176) located opposite the first end region.

7. A device in accordance with any of the Claims 1 to 6, **characterized in that** the mixing device (204) comprises at least one mixing tool (216) which is rotatable about a substantially horizontally oriented axis of rotation (212), wherein the mixing device (204) comprises at least two helices (226, 226') having opposed directions of rotation.

8. A device in accordance with any of the Claims 1 to 7, **characterized in that** the filter aid material comprises particles having a hollow structure and/or a large internal surface area relative to their external dimensions.

9. A device in accordance with any of the Claims 1 to 8, **characterized in that** the filter aid material comprises particles which react chemically with the wet paint overspray.

10. A device in accordance with any of the Claims 1 to 9, **characterized in that** the filter aid material consists of a multiplicity of filter aid material particles which have an average diameter within the range of approximately 10 µm to approximately 100 µm.

11. A device in accordance with any of the Claims 1 to 10, **characterized in that** the device (126) comprises a fluidising means (198) which whirls up the material accommodated in the reservoir (176) by means of pulses of compressed air so that it enters into the stream of crude gas.

12. A device in accordance with any of the Claims 1 to 11, **characterized in that**, in the course of a complete revolution, the mixing device (204) sweeps over a mixing region (220), and **in that** the reservoir (176) comprises a mixing section (180) the inner contour of which is adapted to the outer contour of the mixing region (220).

13. A device in accordance with any of the Claims 1 to 12, **characterized in that** the reservoir (176) comprises a mixing section (180), and **in that** the mixing device (204) sweeps over substantially the entire mixing section (180) of the reservoir (176) in the course of a complete revolution.

14. A method for separating wet paint overspray from a stream of crude gas (120) containing overspray particles which comprises the following process steps:
- dividing the stream of crude gas (120) into at least two partial streams of crude gas (228) which enter at least two different filter devices (132) through different inlet openings (230), said filter devices each comprising at least one filter element (172) for separating the overspray from the respective partial stream of crude gas (228);
- separating the overspray from the partial streams of crude gas (228) by means of the filter elements (172);
- cleansing material from the filter elements (172) of a plurality of different filter devices (132);
- collecting the cleansed material from the plurality of different filter devices (132) in the same reservoir (176);
- mechanically intermixing the cleansed material from the plurality of different filter devices (132) in the reservoir (176) by means of a mixing device (204);
- wherein by periodic cleansing of the filter elements (172) a mixture of filter aid material and wet paint overspray arrives from the filter elements (172) into the reservoir (176) and the partial streams of crude gas (228) are guided at least partly through the reservoir, in order to thereby absorb filter aid material from the reservoir (176).

15. A method in accordance with Claim 14 **characterized in that** differences in the concentration of wet paint overspray in the cleansed material from different filter devices (132) are evened out by the mechanical blending and **in that** the reservoir (176) has an inlet (222) for fresh filter aid material for reducing the concentration of wet paint overspray in the material located in the reservoir (176).

16. A method in accordance with either of the Claims 14 or 15, **characterized in that** a particulate filter aid material is added to the partial streams of crude gas (228) and deposited on the surfaces of the filter elements (172), and **in that** a mixture consisting of filter aid material and wet paint overspray is cleansed from the filter elements (172) of a plurality of different filter devices (132), is collected in the same reservoir (176) and is mechanically intermixed in the reservoir (176) by means of the mixing device (204).

## Revendications

1. Dispositif de séparation d'excès de projection de peinture humide hors d'un courant de gaz brut (120) contenant des particules d'excès de projection, comprenant au moins deux dispositifs de filtre (132), qui comprennent respectivement une ouverture d'entrée (230), à travers laquelle un courant partiel de gaz brut (228) pénètre dans le dispositif de filtre concerné (132), et respectivement au moins un élément de filtre (172) pour la séparation de l'excès de projection hors du courant partiel de gaz brut (228), dans lequel une surface de filtre de l'élément de filtre (172) est munie d'une couche de barrage en une matière auxiliaire de filtre délivrée dans le courant de gaz brut, **caractérisé en ce que** le dispositif (126) comprend au moins un récipient de collecte (176) pour recueillir un mélange de matière auxiliaire de filtre et d'excès de projection de peinture humide évacué d'éléments de filtre (172) de plusieurs dispositifs de filtre (132) et un dispositif de mélange (204) pour le mélange mécanique du mélange évacué de matière auxiliaire de filtre et d'excès de projection de peinture humide provenant de plusieurs dispositifs de filtre (132), dans lequel, par évacuation périodique des éléments de filtre (172), le mélange de matière auxiliaire de filtre et d'excès de projection de peinture humide provenant des éléments de filtre (172) arrive dans le récipient de collecte (176) et les courants partiels de gaz brut (228) sont conduits au moins en partie à travers le récipient de collecte (176), pour reprendre de la matière auxiliaire de filtre hors du récipient de collecte (176).

2. Dispositif selon la revendication 1, **caractérisé en ce que** des différences dans la concentration d'excès de projection de peinture humide dans la matière évacuée de différents dispositifs de filtre (132) sont compensées par le mélange mécanique et **en ce que** le récipient de collecte (176) présente une entrée (222) pour de la matière auxiliaire de filtre fraîche afin de réduire la concentration d'excès de projection de peinture humide dans la matière se trouvant dans le récipient de collecte (176).

3. Dispositif selon l'une des revendications 1 ou 2, **caractérisé en ce que** le récipient de collecte (176) est réalisé en forme d'entonnoir, qui s'étend depuis une région située verticalement en dessous d'un premier dispositif de filtre (132) jusqu'à une région située verticalement en dessous d'un deuxième dispositif de filtre (132).

4. Dispositif selon l'une quelconque des revendications 1 à 3, **caractérisé en ce que** le récipient de collecte (176) présente une sortie de matière (224) pour le prélèvement de matière auxiliaire de filtre chargée d'excès de projection de peinture humide hors du récipient de collecte (176).

5. Dispositif selon l'une quelconque des revendications 1 à 4, **caractérisé en ce que** le récipient de collecte (176) présente une sortie de matière (224) et **en ce que** le dispositif de mélange (204) comprend un outil de mélange (216'), qui soutient l'extraction de matière à travers la sortie de matière (224).

6. Dispositif selon l'une quelconque des revendications 1 à 5, **caractérisé en ce que** l'entrée (222) pour la matière auxiliaire de filtre fraîche est disposée à une première région d'extrémité du récipient de collecte (176) et **en ce que** le récipient de collecte (176) présente une sortie de matière (224), qui est disposée à une deuxième région d'extrémité du récipient de collecte (176) opposée à la première région d'extrémité.

7. Dispositif selon l'une quelconque des revendications 1 à 6, **caractérisé en ce que** le dispositif de mélange (204) présente au moins un outil de mélange (216) pouvant tourner autour d'un axe de rotation (212) orienté essentiellement horizontalement, dans lequel le dispositif de mélange (204) comprend au moins deux hélices (226, 226') tournant en sens contraire.

8. Dispositif selon l'une quelconque des revendications 1 à 7, **caractérisé en ce que** la matière auxiliaire de filtre comprend des particules avec une structure creuse et une grande surface intérieure par rapport à leurs dimensions extérieures.

9. Dispositif selon l'une quelconque des revendications 1 à 8, **caractérisé en ce que** la matière auxiliaire de filtre comprend des particules réagissant chimiquement avec l'excès de projection de peinture humide.

10. Dispositif selon l'une quelconque des revendications 1 à 9, **caractérisé en ce que** la matière auxiliaire de filtre se compose d'une multiplicité de particules de matière auxiliaire de filtre, qui présentent un diamètre moyen compris dans la plage d'environ 10 µm à environ 100 µm.

11. Dispositif selon l'une quelconque des revendications 1 à 10, **caractérisé en ce que** le dispositif (126) présente un dispositif d'agitation (198), qui agite au moyen d'impulsions d'air comprimé la matière contenue dans le récipient de collecte (176) et l'introduit dans le courant de gaz brut.

12. Dispositif selon l'une quelconque des revendications 1 à 11, **caractérisé en ce que** le dispositif de mélange (204) parcourt une région de mélange (220) lors d'une révolution complète et **en ce que** le récipient de collecte (176) comprend une section de mélange (180), qui présente un contour intérieur adapté au contour extérieur de la région de mélange (220).

13. Dispositif selon l'une quelconque des revendications 1 à 12, **caractérisé en ce que** le récipient de collecte (176) comprend une section de mélange (180) et **en ce que** le dispositif de mélange (204) parcourt essentiellement toute la section de mélange (180) du récipient de collecte (176) lors d'une révolution complète.

14. Procédé de séparation d'excès de projection de peinture humide hors d'un courant de gaz brut (120) contenant des particules d'un excès de projection, comprenant les opérations suivantes:
- diviser le courant de gaz brut (120) en au moins deux courants partiels de gaz brut (228), qui pénètrent par différentes ouvertures d'entrée (230) dans au moins deux dispositifs de filtre différents (132), qui comprennent respectivement au moins un élément de filtre (172) pour la séparation de l'excès de projection hors du courant partiel de gaz brut respectif (228);
- séparer l'excès de projection hors des courants partiels de gaz brut (228) au moyen des éléments de filtre (172);
- évacuer la matière des éléments de filtre (172) de plusieurs dispositifs de filtre différents (132);
- recueillir la matière évacuée hors des multiples dispositifs de filtre différents (132) dans le même récipient de collecte (176);
- mélanger mécaniquement la matière évacuée provenant des multiples dispositifs de filtre différents (132) dans le récipient de collecte (176) au moyen d'un dispositif de mélange (204);
dans lequel, par évacuation périodique des éléments de filtre (172), un mélange de matière auxiliaire de filtre et d'excès de projection de peinture humide provenant des éléments de filtre (172) arrive dans le récipient de collecte (176) et les courants partiels de gaz brut (228) sont conduits au moins en partie à travers le récipient de collecte (176), pour reprendre de la matière auxiliaire de filtre hors du récipient de collecte (176).

15. Procédé selon la revendication 14, **caractérisé en ce que** des différences dans la concentration d'excès de projection de peinture humide dans la matière évacuée de différents dispositifs de filtre (132) sont compensées par le mélange mécanique et **en ce que** le récipient de collecte (176) présente une entrée (222) pour de la matière auxiliaire de filtre fraîche afin de verrouiller la concentration d'excès de projection de peinture humide dans la matière se trouvant dans le récipient de collecte (176).

16. Procédé selon l'une des revendications 14 ou 15, **caractérisé en ce que** l'on délivre une matière auxiliaire de filtre sous forme de particules dans les courants partiels de gaz brut (228) et on provoque son dépôt sur les surfaces des éléments de filtre (172) et **en ce que** l'on évacue un mélange de matière auxiliaire de filtre et d'excès de projection de peinture humide des éléments de filtre (172) de plusieurs dispositifs de filtre différents (132), on le recueille dans le même récipient de collecte (176) et on le mélange mécaniquement dans le récipient de collecte (176) au moyen du dispositif de mélange (204).
